Europäisches Patentamt

European Patent Office

Office européen des brevets

(11) Veröffentlichungsnummer: **0 279 064 B1**

# EUROPÄISCHE PATENTSCHRIFT

(45) Veröffentlichungstag der Patentschrift: **20.05.92**

(51) Int. Cl.⁵: **H02K 9/18**, H02K 1/20

(21) Anmeldenummer: **87118983.3**

(22) Anmeldetag: **21.12.87**

(54) **Gasgekühlte elektrische Maschine.**

(30) Priorität: **06.02.87 DE 3703594**

(43) Veröffentlichungstag der Anmeldung:
**24.08.88 Patentblatt 88/34**

(45) Bekanntmachung des Hinweises auf die
Patenterteilung:
**20.05.92 Patentblatt 92/21**

(84) Benannte Vertragsstaaten:
**AT BE CH DE ES FR GB IT LI NL SE**

(56) Entgegenhaltungen:
**DE-C- 612 236
FR-A- 2 306 554
US-A- 2 650 313
US-A- 3 714 478**

**IEEE TRANSACTIONS ON POWER APPARA-
TUS AND SYSTEMS, Band PAS-103, Nr. 10,
Oktober 1984, Seiten 2974-2981, IEEE, New
York, US; B.E.B GOTT et al.: "Experience and
recent development with gas directly cooled
rotors for large steam turbine generators"**

**PATENT ABSTRACTS OF JAPAN, Band 10,
Nr. 179 (E-414)[2235], 24. Juni 1986; & JP-A-61
26 449**

**PATENT ABSTRACTS OF JAPAN, Band 9, Nr.
305 (E-363)[2028], 3. Dezember 1985; & JP-
A-60 141 138**

(73) Patentinhaber: **BBC Brown Boveri AG
Haselstrasse
CH-5401 Baden(CH)**

(72) Erfinder: **Geller, Marius, Dr.
Sonnenweg 6
CH-5442 Fislisbach(CH)**

## Beschreibung

Technisches Gebiet

Die Erfindung bezieht sich auf eine elektrische Maschine mit einem Gehäuse, einem in diesem Gehäuse angeordnetem Stator mit in Nuten am Innenumfang angeordnetem indirekt gekühlten Statorwicklungsleitern und einem Rotor, wobei der Blechkörper des Stators aus einzelnen, durch Distanzstege voneinander beabstandeten Teilblechpaketen aufgebaut ist und die Zwischenräume zwischen zwei aufeinanderfolgenden Teilblechpaketen radial verlaufende Kühlschlitze bilden, und die Kühlschlitze ringförmige Luftspalträume am Innenumfang des Statorblechpakets mit Kammerräumen verbinden, die zwischen dem Aussenumfang des Statorblechkörpers und dem Gehäuse gelegen sind, welche Kammerräume Kaltgaskammern umfassen, von denen kaltes Kühlgas in zugehörige erste Luftspalträume gedrückt wird, und Warmgasräume umfassen, in welchen erwärmtes Kühlgas aus zweiten Luftspalträumen radial auswärts gerichtet einströmt, wobei Kühlgas-Fördermittel und Kühlgas-Leiteinrichtungenan mindestens einem Maschinenende, vorzugsweise an beiden Maschinenenden, vorgesehen sind, welche das über Wärmetauscher gekühlte Kühlgas als Kaltgas den Kaltgaskammern zuleiten und das aufgewärmte Kühlgas aus den Warmgaskammern wieder absaugen, wobei die im mittleren Abschnitt der Maschine vorhandene(n) Warmgaskammer(n) über separate Kühlgasleitungen verfügen.

Eine gasgekühlte elektrische Maschine mit diesen Merkmalen ist beispielsweise aus der US-A-3 714 478 bekannt.

Technologischer Hintergrund und Stand der Technik

Prinzip der sogenannten indirekten Kühlung ist es, die in den Statorwicklungsstäben entstehenden Verluste an das Kühlmedium (Wasserstoff oder Luft) abzugeben. Der hauptsächliche Wärmefluss findet dabei vom Stabkupfer über die Isolation in den Zahnbereich des Statorblechkörpers statt. Von den Statorzähnen wird die Wärme an das Kühlmedium abgegeben.

Die Grenzen der Aufwärmung sind dabei durch die Temperaturempfindlichkeit der Isolation und darüber hinaus durch entsprechende Maximaltemperaturen vorgegeben, welche in Normen durch verschiedene Isolationsklassen festgelegt sind (ANSI, IEC).

Infolge der relativ grossen Temperaturdifferenz zwischen dem in die Isolation eingebetteten Statorkupfer und der Aussenschicht der Isolation ist die maximale Leistung eines indirekt gasgekühlten Turbogenerators mit klassischem Kühlprinzip begrenzt.

Es hat daher nicht an Vorschlägen gefehlt, die Kühlung zu verbessern, wobei sich diese Bemühungen hauptsächlich auf die Intensivierung der Kühlung im mittigen Maschinenbereich konzentrierten.

So wird in der eingangs genannten EP-Patentanmeldung eine gasgekühlte elektrische Maschine beschrieben, bei welcher Kühlgas durch gruppenweise zusammengefasste Kühlschlitze zu- und abgeführt wird. In der einen Gruppe strömt kaltes Kühlgas vom Blechrücken her zum Maschinenluftspalt, in der anderen Gruppe strömt aufgewärmtes Kühlgas vom Maschinenluftspalt zum Statorrücken. Um eine Beaufschlagung der Wicklungsleiter mit bereits aufgewärmtem Kühlgas zu vermeiden, werden in den Kühlschlitzen der zweiten Gruppe die Wicklungsleiter abgeschottet und durch axiale, gegenüber den Wicklungsleitern offene Kanäle im Zahnkopf, die von Frischgas durchströmt werden, gekühlt. Dies ermöglicht eine weitgehende Nivellierung des Temperaturniveaus in Aktivteillängsrichtung.

Bei der aus der DE-OS 34 44 189 bekannten gasgekühlten Maschine sind zur Verbesserung des Wärmeüberganges und der Ausnützung der Kühlgasströme die Zähne des Ständerblechkörpers mit zahninternen Kühlkanälen versehen, welche mit radialen Kühlgasschlitzen, und zwar Kaltgasschlitzen und Warmgasschlitzen kommunizieren. Im Axialbereich der Kaltgaskammern werden radial-axiale Kühlpfade durch unterschiedliche Stanzungen einander benachbarter Blechlagen gebildet, wobei die Stanzungen sich zumindest radial überlappen. Die Kühlpfade münden in den Maschinenluftspalt über Kühlgasauslassschlitze. Den im Axialbereich der Warmgaskammern angeordneten Teilblechpaketen wird ein Kaltgaskreis überlagert. Hierzu werden axiale Ueberströmkanäle und radiale Zusatzschlitze vorgesehen. Letztere sind jeweils zwischen den radialen Warmgasschlitzen etwa mittig angeordnet und haben eine geringere axiale Weite als letztere.

Beide bekannten Massnahmen erfordern vergleichsweise grosse Eingriffe in den Aufbau und die Auslegung des Statorblechkörpers und sind daher aufwendig.

Aus der US-A-3 714 478 ist ein grosser gasgekühlter Turbogenerator bekannt, bei welcher das Heiss- und Frischgas durch Rohrleitungen ausserhalb des Maschinengehäuses von Heissgas- und Frischgaskammern im Statorrücken ab- bzw. zugeführt wird, wobei den mittleren Heissgaskammern separate Rohrleitungen zugeordnet sind. Das Heissgas aus diesen mittleren Kammern strömt in Richtung Maschinenende in die endseitige Heissgaskammer und vermischt sich dort mit dem Heissgas aus dem endseitigen Bereich des Statorblechkörpers. Dies hat zur Folge, dass eine Erhöhung des Gesamtvolumenstroms nicht wesentlich zur Nivellierung des Temepraturniveaus in Maschinenlängsrichtung beitragen kann. Auch eine Druckerhöhung im Kreislauf führt nicht zum gewünschten Ziel.

Darstellung der Erfindung

Aufgabe der Erfindung ist es, eine gasgekühlte elektrische Maschine der eingangs genannten Gattung zu schaffen, die praktisch ohne bauliche Eingriffe in den Zahnbereich des Statorblechkörpers eine wesentliche Leistungssteigerung der relativ kostengünstigen indirekt gekühlten Maschinen in einem Bereich ermöglicht, der bisher nur durch aufwendigere und teurere direkt gekühlte Maschinentypen abgedeckt werden konnte.

Diese Aufgabe wird bei einer gasgekühlten Maschine durch die in den Patentansprüchen gekennzeichnete Erfindung gelöst.

Durch die erfindungsgemässe Heissgasführung wird eine Vermischung des erwärmten Kühlgases aus den mittigen Warmgasräumen mit demjenigen aus den endseitigen Warmgasräumen verhindert. Was jedoch von weit grösserer Bedeutung für die Kühlwirkung ist, besteht in der nun erstmals vorhandenen Möglichkeit, die Volumenströme durch die einzelnen Kühlschlitze und der ihnen zugeordneten Luftspalt- und Kammerräume so aufzuteilen, dass eine fast vollständige Nivellierung des Temperaturprofils in Maschinenlängsrichtung resultiert.

Kurze Beschreibung der Zeichnungen

Die Erfindung wird nachstehend anhand von Ausführungsbeispielen näher erläutert. In der Zeichnung zeigt

Fig. 1    eine vereinfachte Darstellung einer gasgekühlten elektrischen Maschine bekannter Bauart,

Fig. 2    die Kühlgasführung dieser bekannten Maschine in prinzipieller Darstellung,

Fig. 3    die prinzipielle Temperaturverteilung der Statorstäbe in Maschinenlängsrichtung, welche sich aus der bekannten Kühlgasführung ergibt,

Fig. 4    die zugehörige Verrohrung im Raum zwischen Statorblechkörpern und Gehäusemantel,

Fig. 5    eine schematische Darstellung der erfindungsgemässen Volumenstromaufteilung / Kühlgasführung (b) im Vergleich zur bekannten (a) gemäss Fig, 2,

Fig. 6    ein Ausführungsbeispiel einer Verrohrung im Raum zwischen Statorblechkörper und Gehäusemantel zur Realisierung der erfindungsgemässen Kühlgasführung,

Fig. 7    eine Abwandlung der Kühlgasführung gemäss Fig. 5 mit zugehörigem Verrohrungsschema zur Sicherstellung des Notbetriebes bei Ausfall eines Kühlers.

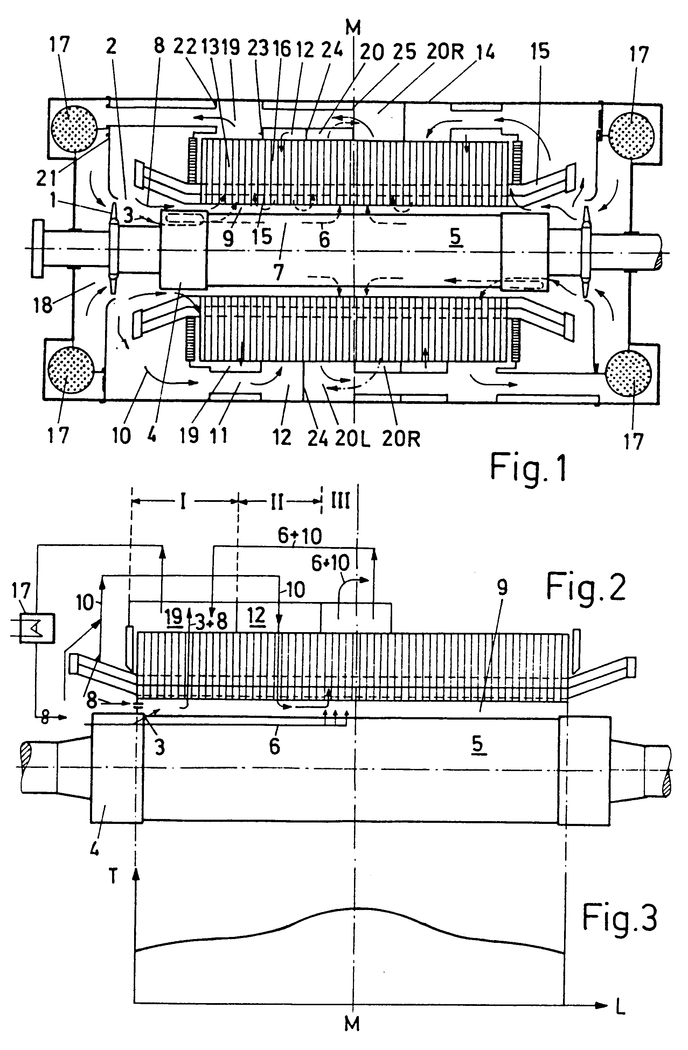

Das Kühlungsprinzip eines wasserstoffgekühlten Turbogenerators wird in Fig. 1 verdeutlicht. Es ist nur eine Maschinenhälfte zu betrachten, da der Generator symmetrisch aufgebaut ist. In dieser Figur sind alle für das unmittelbare Verständnis der Erfindung nicht notwendigen Einzelheiten fortgelassen worden. Eine weit ausführlichere Darstellung und Beschreibung einer derartigen Maschine findet sich beispielsweise in der CH-Patentschrift 607 421.

Das von einem Hauptventilator 1 geförderte Kühlgas teilt sich im Wickelkopfraum 2 in einzelne Teilvolumenströme, die den verschiedenen Strömungskanälen in der Maschine wie folgt zugeordnet sind:

- Einen ersten Volumenstrom 3 durch den Rotorwickelkopf 4 des Rotors 5,
- einen zweiten Volumenstrom 6 durch den Rotoraktivteil 7 zur Kühlung der (nicht gezeichneten) Rotorwicklung,
- einen dritten Volumenstrom 8 durch den Maschinenluftspalt 9,
- und einen vierten Volumenstrom 10 durch einen Kaltgaskanal 11 in eine Kaltgaskammer 12 im Raum zwischen Statorblechkörper 13 und dem ihn umgebenden Maschinengehäuse 14.

Die Kühlung des Statorblechkörpers 13 und damit der Statorwicklungsstäbe 15 erfolgt durch radial verlaufende Kühlschlitze 16, welche zwischen einzelnen Teilblechpaketen gebildet sind. Diese Kühlschlitze 16 sind gleichmässig über die gesamte Aktivlänge des Stators verteilt und in drei Zonen pro Maschinenhälfte aufgeteilt.

Jeder Zone ist am Statorrücken eine Kammer zugeordnet, wodurch die Zuordnung unterschiedlicher Teilvolumenströme in die verschiedenen radialen Kühlschlitze festgelegt ist. Das erwärmte Kühlgas wird am Ende seines Kreislaufes Kühlern 17 zugeführt, strömt in den Ansaugraum 18 des Hauptventilators 1 und von dort aus wieder in den Kreislauf.

Die prinzipielle Kühlgasführung im Stator sowie die Verteilung der Teilvolumenströme in die einzelnen Kammern sind in Fig. 2 verdeutlicht, wobei gleiche Teile mit den selben Bezugzeichen wie in Fig. 1 versehen sind.

Die Einteilung des Statorblechkörpers in drei Zonen I, II und III pro Maschinenhälfte erfolgt nach folgendem Schema:

- Zone I Kühlgaszufuhr durch den Luftspalt 9 mit Kaltgas (Volumenstrom 8) und erwärmtem Kühlgas aus dem Rotorwickelkopf 4 (Volumenstrom 3)
- Zone II Kühlgaszufuhr zum Statorrücken her durch die Kanäle 11 und die Kaltgaskammer 12 (Volumenstrom 10)
- Zone III Kühlgaszufuhr über den Luftspalt 9 mit Gasstrom aus Zone II und erwärmtem Kühlgas aus dem Rotor 5 (Volumenstrom 6 + 10) in eine mittlere Warmgaskammer 20R bzw. 20L.

Dabei ist anzumerken, dass der Volumenstrom 6 + 10 aus der mittleren Warmgaskammer 20L (Zone III) in den Kühlgaskreislauf der rechten Maschinenhälfte geleitet wird, während jener aus der rechten Maschinenhälfte in den Kreislauf der linken eingeschleust wird. Diese gekreuzte Kühlgasführung des Gasstromes aus Zone III dient der teilweisen Vermischung der Gasströme aus linker und rechter Maschinenhälfte, um bei Ausfall oder Wartung einer der vier Kühler einen sicheren Betrieb bei geringfügig reduzierter Leistung sicherzustellen. Diese Massnahme ist für die Wirkungsweise der Erfindung ohne Bedeutung und wurde im Beispielsfall nur aufgenommen, um die Erfindung realitätsbezogen zu beschreiben.

Aus Fig. 2 erhellt, dass es in Maschinenmitte wegen der Zufuhr des bereits aufgeheizten Kühlgases (Volumenstrom 6 + 10) beim Eintritt in die Zone III zu einem deutlichen Temperaturmaximum der Stäbe in Maschinenmitte M kommt, welche die maximale Ausnutzung des Generators begrenzen. Für die relativ hohe Temperatur des Gasstromes (Volumenstrom 6 + 10) ist insbesondere das heisse Rotorgas (Volumenstrom 6) verantwortlich. Es stellt sich in den Statorstäben eine Temperaturverteilung in Maschinenlängsrichtung ein, deren prinzipieller Verlauf in Fig. 3 veranschaulicht ist, in welcher die Ordinate die Temperatur T der Statorwicklungsstäbe, die Abszisse die Maschinenlängsrichtung L bedeutet.

Aus Fig. 2 erhellt ferner, dass in der der Zone I zugeordneten äusseren Warmgaskammer 19L eine Vermischung der Volumenströme 6 + 10 aus Zone III und der Volumenströme 3 + 8 aus Zone I resultiert. Aus der Kühlgasführung gemäss Fig. 2 ist ferner ersichtlich, dass eine Erhöhung des Gesamtvolumenstroms, z.B. durch Erhöhung der Ventilatorleistung nicht wesentlich zur Nivellierung des Temperaturniveaus in Maschinenlängsrichtung beitragen kann, da die Strömungswiderstände für die Volumenströme 6 + 10 im Vergleich zu denjenigen der Volumenströme 3 + 8 viel höher sind. Auch eine Druckerhöhung im Kreislauf führt nicht zum gewünschten Ziel, weil auf diese Weise die Druckdifferenz in den Zonen I und III nicht verkleinert werden kann.

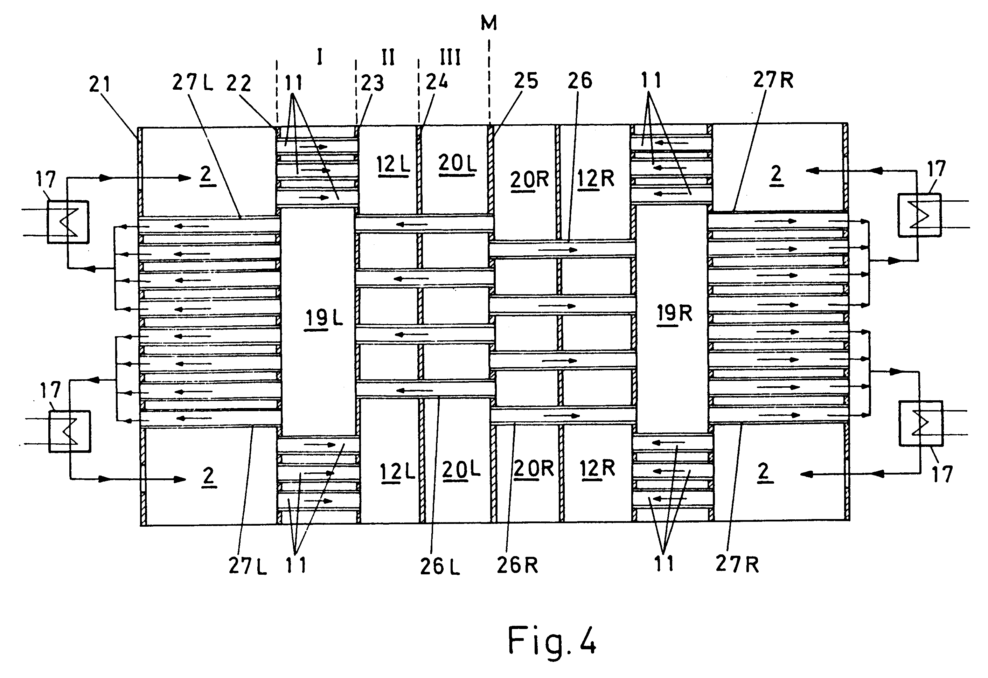

Die Art und Weise, wie die Kühlgasführung gemäss Fig. 2 in einer gasgekühlten Maschine konstruktiv ausgeführt ist, geht aus dem Verrohrungsschema der Fig. 4 für den halben abgewickelten Maschinenumfang hervor. Dabei entsprechen die Zonen I, II und III denjenigen der Fig. 2.

Die Zu-und Abfuhr des Kühlgases erfolgt im Raum zwischen dem Statorblechkörper 13 und dem Gehäuse 14 über Rohre bzw. den Raum zwischen den Rohren. Die Rohre selbst sind in Trennwänden 21 bis 25 befestigt in der Art, wie es bei Rohrböden üblich ist. Die erste Trennwand 21 grenzt den Ansaugraum 18 des Hauptventilators 1 vom Wickelkopfraum 2 ab. Die Trennwand 22 trennt den Wickelkopfraum 2 von der äusseren Warmgaskammer 19L. Die Trennwand 23 trennt die äussere Warmgaskammer 19 von der Kaltgaskammer 12 und begrenzt somit die Zone I. Die Trennwand 24 trennt die Kaltgaskammer 12 von der inneren Warmgaskammer 20L und begrenzt somit die Zone II. Die Trennwand 25 liegt in Maschinenmitte M und begrenzt Zone III. Die Strömungsrichtung des Kühlgases ist soweit möglich durch Pfeile veranschaulicht und stellt sich wie folgt dar:

Von den Kühlern 17 gelangt das Kühlgas über den (in Fig. 4 nicht eingezeichneten Hauptventilator 1) in den Wickelkopfraum 2, wird von dort über die Rohre 11 durch die äussere Warmgaskammer 19 geführt und gelangt in die linke Kaltgaskammer 12L. Von dort aus tritt das noch kalte Kühlgas durch die Kühlschlitze 16 radial nach innen in den Statorblechkörper 13 ein, nimmt dort Wärme aus diesem und der Statorwicklung 15 auf, vermischt sich mit dem heissen Rotorgas (Volumenstrom 6) aus dem Rotor und gelangt über die Kühlschlitze radial nach aussen strömend in die innere Warmgaskammer 20L. Danach strömt das aufgeheizte Kühlgas (Volumenstrom 6 + 10) durch die Rohre 26R, welche sowohl die rechte innere Warmgaskammer 20R als auch die rechte Kaltgaskammer 12R durchsetzen, in die rechte äussere Warmgaskammer 19R und dann anschliessend durch Rohre 27R, welche den Wickelkopfraum 2 durchsetzen, zurück zu den Kühlern 17 am rechten Maschinenende.

In analoger Weise gelangt der Volumenstrom 6 + 10 von der rechten Maschinenseite in die rechte innere Warmgaskammer 20R, dann über Rohre 26L in die linke äussere Warmgaskammer 19L, wo er sich mit dem Volumenstrom 3 + 8 vermischt, über Rohre 27 L zurück zu den Kühlern 17 am linken Maschinenende.

Eine deutliche Reduzierung des relativen Temperaturmaximums in der Stabmitte kann erfindungsgemäss dadurch erreicht werden, indem der Volumenstrom durch die Zone II vergrössert und bei konstanter Gesamtfördermenge des Ventilators derjenige durch Zone I verringert wird. Dieses Ziel lässt sich ohne wesentliche Eingriffe in das gesamte Kühlgassystem dadurch erreichen, dass der Volumenstrom I gedrosselt wird, indem zum einen die Querschnitte der Warmgasabfuhrkanäle aus der Zone I verringert werden, zum andern die Rückführung der erwärmten Kühlgase aus der Zone III nicht über die der Zone I zugeordnete äussere Warmgaskammer 19L, sondern auf direktem Wege zu den Kühlern 17 an beiden Maschinenenden erfolgt.

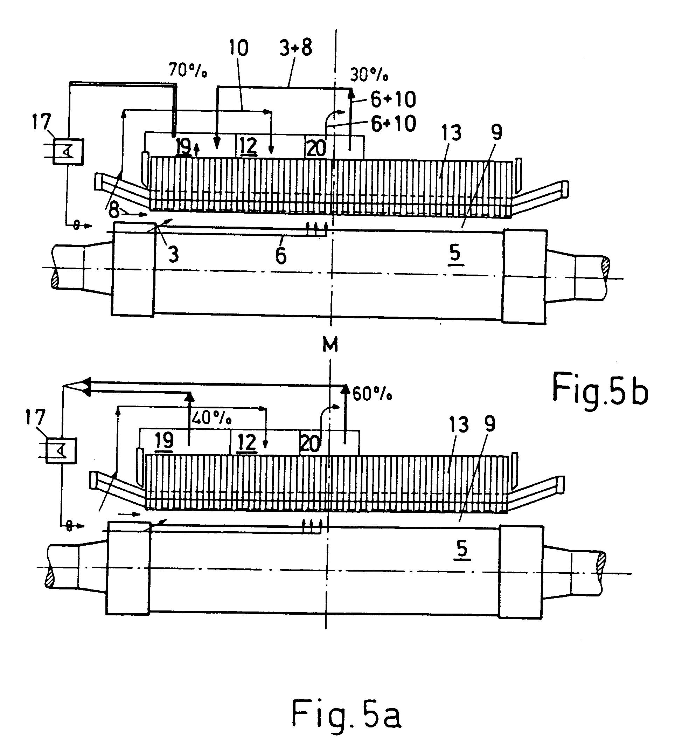

Dies ist in Fig. 5a verdeutlicht, in welcher qualitativ die verbesserte Volumenstromaufteilung der alten (Fig. 5b) gegenübergestellt ist. Wegen der nunmehr grösseren Gasmenge, die der Zone III über die Zone II und gegebenenfalls zusätzlich über den Luftspalt 9 zugeführt wird, erreicht die effektive Mischungstemperatur des Kühlgases am Eintritt in die Zone III nach Vermischung mit dem in diesem Bereich heissen Rotorgas geringere Werte, wodurch die erwünschte Kühlungsverbesserung der Statorstäbe sichergestellt ist. Diese Vergrösserung der Teilvolumenströme in den Zonen II und III von beispielsweise 30 auf 60 % stellt sich bei unveränderter Gesamtfördermenge mit Hilfe einer Drosselung des Volumenstroms durch die Zone I von selbst ein.

Die sich mit der vorgeschlagenen Kühlgasführung einstellenden Teilvolumenströme sind in Fig. 5a in Prozenten des Gesamtvolumenstroms eingetragen und betragen im Beispielsfall 40 % für den Volumenstrom 3 + 8 und 60 % für den Volumenstrom 6 + 10.

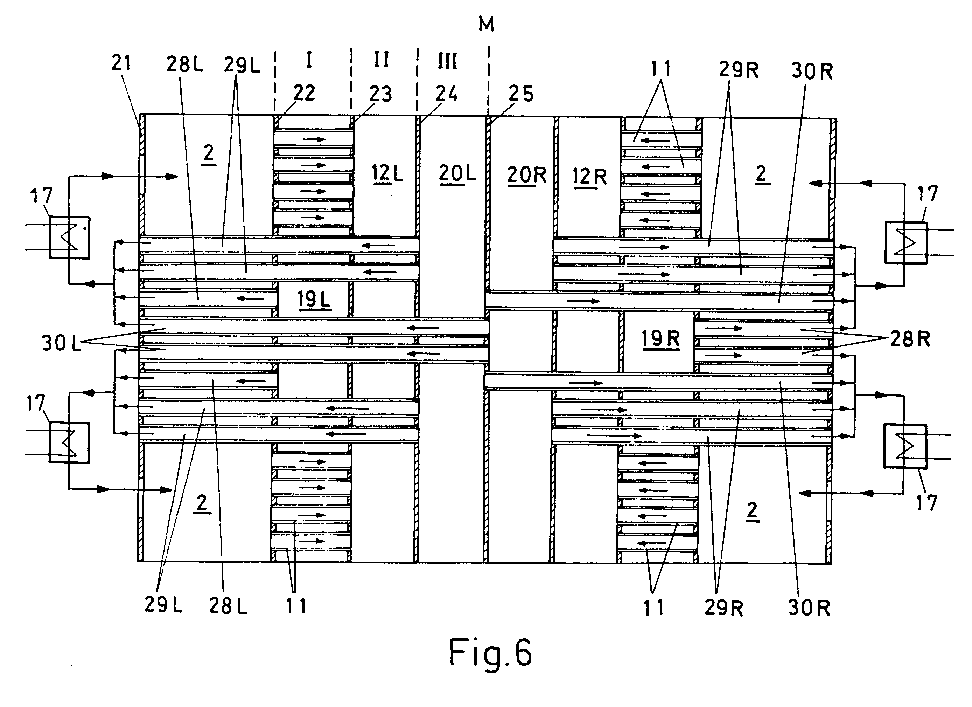

Vergleicht man die Kühlgasführung nach dem Stand der Technik und deren zugehöriges Verrohrungsschema gemäss Fig. 4 mit der erfindungsgemässen Kühlgasführung, deren Verrohrungsschema in Fig. 6 schematisch wiedergegeben ist, so erkennt man sehr deutlich, dass es sehr wenig konstruktiver Massnahmen bedarf, die erfindungsgemässe Volumenstrom-Aufteilung zu verwirklichen. Es ist dabei lediglich die Kühlgasführung im Jochbereich des Generators derart abzuändern, dass nicht in der Warmgaskammer 19 die Gasströme aus Zone I und III vermischt werden, um von dort gemeinsam den Kühlern 17 zugeführt zu werden, sondern es sind beide Teilvolumenströme sowohl aus Zone I als auch aus Zone III getrennt abzuführen. In Fig. 5a ist diese Vorgehensweise skizziert, das entsprechende Verrohrungsschema ist in Fig. 6 für den halben abgewickelten Maschinenumfang wiedergegeben. Der Aufbau entspricht dabei weitgehend demjenigen, wie er in Zusammenhang mit Fig. 4 beschrieben wurde und gleiche Teile wie in Fig. 4 mit denselben Bezugszeichen versehen sind. Es ist deutlich zu erkennen, dass für die Abführung des Gasstromes aus der Warmgaskammer 19L nunmehr nur noch zwei Rohre 28L auf den halben Maschinenumfang und pro Hälfte vorgesehen sind, woraus sich ohne weiteres die gewünschte Drosselwirkung ergibt, während vier Rohre 29L pro Maschinenhälfte das aufgeheizte Kühlgas aus der mittleren Warmgaskammer 20L und zwei weitere Rohre 30L Kühlgas aus der mittleren Warmgaskammer 20R der anderen Maschinenhälfte direkt zu den Maschinenenden und von dort aus zu den Kühlern leiten.

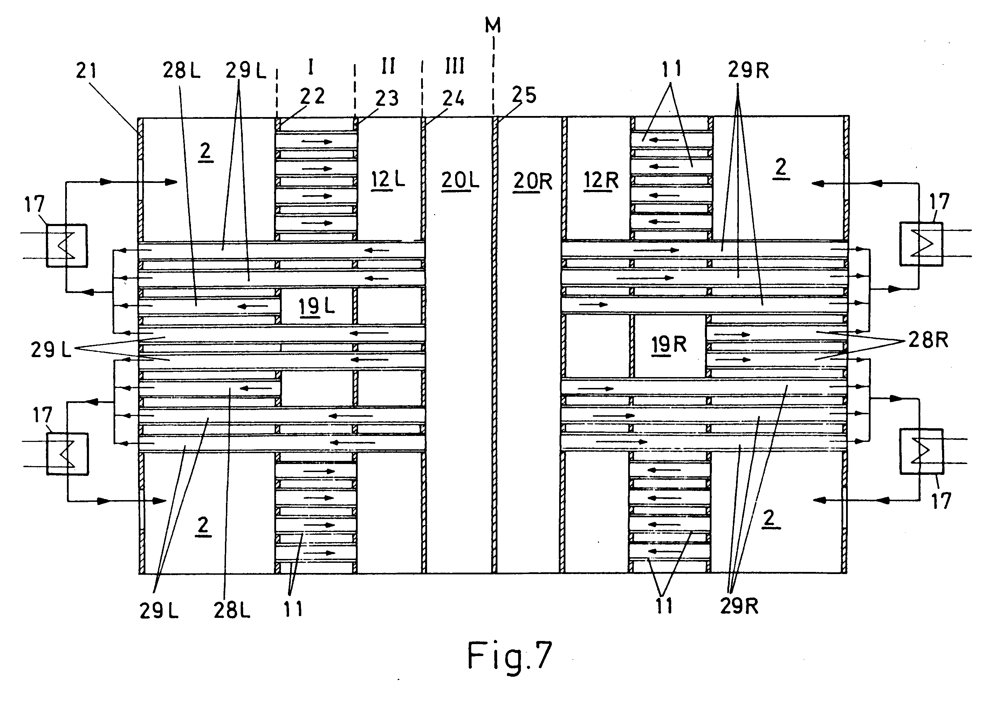

In dem in Fig. 7 dargestellten Verrohrungsschema ist veranschaulicht, welches sich vom demjenigen nach Fig. 6 lediglich darin unterscheidet, dass in Maschinenmitte M eine echte Trennung der Gaskreisläufe für jede Maschinenhälfte vollzogen ist und alle Rohre 29 einer Maschinenhälfte in die dieser zugeordneten Sammelräume am Maschinenende und von dort aus zu den Kühlern 17 führen.

Ohne den Rahmen der Erfindung zu verlassen, lässt sich die erfindungsgemässe Volumenstromaufteilung auch bei gasgekühlten Maschinen mit mehr als drei Zonen anwenden, indem die zur Verfügung stehende maximale Rohrzahl derart den einzelnen Warm- und Kaltgaskammern zugeteilt wird, dass die Volumenstromaufteilung in den einzelnen Zonen optimal wird.

Eine weitere Möglichkeit der Feinanpassung der Volumenströme besteht ferner darin, die (axiale) Breite der radialen Kühlschlitze 16 in den einzelnen Zonen unterschiedlich zu bemessen, z.B. schmalere Kühlschlitze in der Zone I und/oder II als in der Zone III und/oder unterschiedliche axiale Längen der Teilblechpakete in den verschiedenen Zonen I, II und III vorzusehen.

**Patentansprüche**

1. Elektrische Maschine mit einem Gehäuse (14), einem in diesem Gehäuse angeordnetem Stator (13) mit in Nuten am Innenumfang angeordneten indirekt gekühlten Statorwicklungsleitern und einem Rotor (5), wobei der Blechkörper des Stators aus einzelnen, durch Distanzstege voneinander beabstandeten Teilblechpaketen aufgebaut ist und die Zwischenräume zwischen zwei aufeinanderfolgenden Teilblechpaketen radial verlaufende Kühlschlitze bilden, und die Kühlschlitze ringförmige Luftspalträume am Innenumfang des Statorblechpakets mit Kammern verbinden, die zwischen dem Aussenumfang des Statorblechkörpers und dem Gehäuse gelegen sind, welche Kaltgaskammern (12) umfassen, von denen kaltes Kühlgas in zugehörige erste Luftspalträume gedrückt wird, und Warmgaskammern (19) umfassen, in welche erwärmtes Kühlgas aus zweiten Luftspalträumen radial auswärts gerichtet einströmt, wobei Ventilatoren (1) und Kühlgas-Leiteinrichtungen an mindestens einem Maschinenende, vorzugsweise an beiden Maschinenenden, vorgesehen sind, welche das über Wärmetauscher (17) gekühlte Kühlgas als Kaltgas den Kaltgaskammern zuleiten und das aufgewärmte Kühlgas aus den Warmgaskammern wieder absaugen, wobei die im mittleren Abschnitt der Maschine vorhandene(n) Warmgaskammer(n) (20) über separate Kühlgasleitungen (29,30) verfügen, dadurch gekennzeichnet, dass besagte Kühlgasleitungen (29,30) unter Umgehung der endseitigen Warmgaskammern (19) eine direkte Verbindung zwischen der(den) mittigen Warmgaskammer(n) und den Wärmetauschern (17) herstellen, und dass die Zu- und Abfuhr des Kühlgases über Rohre bzw. den Raum zwischen den Rohren, die im Raum zwischen dem Statorblechkörper und dem Gehäuse verlegt sind, erfolgt.

2. Elektrische Maschine nach Anspruch 1, dadurch gekennzeichnet, dass die Warm- und Kaltgaskammern (12,19,20) durch radial verlaufende Trennwände (22-25) gebildet sind, welche im Raum zwischen dem Aussenumfang des Statorblechkörpers (13) und dem Gehäuse (14) angeordnet sind, und die Kühlgasleitung durch Rohre (11,29,30) unterschiedlicher Länge gebildet sind.

3. Elektrische Maschine nach Anspruch 2, dadurch gekennzeichnet, dass die Trennwände eine erste, endseitige Warmgaskammer (19), eine sich daran anschliessende Kaltgaskammer (12) und eine zweite, mittige Warmgaskammer (20) begrenzen, wobei der ersten Warmgaskammer (19) Kühlgas durch die Kühlschlitze (16) vom Maschinenluftspalt (9) radial nach aussen zugeführt wird, aus der Kaltgaskammer (19) durch die Kühlschlitze (16) radial nach innen zum Maschinenluftspalt (9) und nach Umlenkung durch Kühlschlitze wieder radial nach aussen in die zweite Warmgaskammer (20) geführt wird

4. Elektrische Maschine nach Anspruch 3, dadurch gekennzeichnet, dass bei einer vorgegebenen Förderleistung des Hauptventilators durch bemessung der Anzahl der Rohre (11,29,30) und/oder deren Querschnitt der Volumenstrom durch die zweite Warmgaskammer (20) so eingestellt ist, dass dieser mehr als 50 % des vom Ventilator (1) geförderten Volumenstroms ist.

5. Elektrische Maschine nach einem der Ansprüche 1 bis 4, dadurch gekennzeichnet, dass die Verteilung des vom Ventilator (1) erzeugten Volumenstroms zusätzlich durch unterschiedliche axiale Breite der Kühlschlitze (16) einstellbar ist, derart, dass die Schlitzbreite im endseitigen Abschnitt des Statorblechkörpers (13) kleiner ist als im mittigen Abschnitt des Statorblechkörpers.

6. Elektrische Maschine nach einem der Ansprüche 1 bis 5, dadurch gekennzeichnet, dass die Verteilung des vom Ventilator (1) erzeugten Volumenstroms zusätzlich durch unterschiedliche axiale Breite der Teilblechpakete des Statorblechkörpers (13) und/oder durch unterschiedliche axiale Breite der Kühlschlitze (16) einstellbar ist, derart, dass die Breite der Teilblechpakete im endseitigen Abschnitt grösser ist als im mittigen Abschnitt des Statorblechkörpers (13) und/oder deren gegenseitiger Abstand im endseitigen Abschnitt kleiner ist als im mittigen Abschnitt des Statorblechkörpers (13).

## Claims

1. Electric machine having a housing (14), a stator (13), disposed in said housing, with indirectly cooled stator winding conductors disposed in grooves on the inside circumference, and a rotor (5), the laminated body of the stator being constructed of individual laminated subassemblies spaced from each other by spacing bridges and the intermediate cavities between two successive laminated subassemblies forming radially extending cooling slits, and the cooling slits connecting annular air-gap cavities at the inside circumference of the laminated stator assembly to chambers which are situated between the outside circumference of the laminated stator body and the housing and which comprise cold-gas chambers (12), from which cold cooling gas is forced into associated first air-gap cavities, and comprise hot-gas chambers (19) into which heated cooling gas flows from second air-gap cavities in a radially outwards direction, there being provided at at least one end of the machine, preferably at both ends of the machine, fans (1) and cooling-gas guidance devices which supply the cooling gas, cooled by heat exchangers (17), as cold gas to the cold-gas chambers and extract the heated cooling gas from the hot-gas chambers again, the hot gas chamber(s) (20) present in the central section of the machine having available separate cooling-gas lines (29, 30) characterised in that said cooling-gas lines (29, 30), by circumventing the hot-gas chambers (19) at the ends, establish a direct connection between the central hot-gas chamber(s) and the heat exchangers (17) and in that the supply and removal of the cooling-gas takes place via tubes or the cavity between the tubes which are laid in the cavity between the laminated stator body and the housing.

2. Electric machine according to Claim 1, characterised in that the hot-gas and cold-gas chambers (12, 19, 20) are formed by radially extending partitions (22-25) which are disposed in the cavity between the outside circumference of the laminated stator body (13) and the housing (14), and the cooling-gas line [sic] are formed by tubes (11, 29, 30) of various length.

3. Electric machine according to Claim 2, characterised in that the partitions separate a first hot-gas chamber (19) at the end, a cold-gas chamber (12) adjoining thereto and a second central hot-gas chamber (20), cooling gas being fed to the first hot-gas chamber (19) through the cooling slits (16) from the air gap (9) of the machine radially outwards, and being fed from the cold-gas chamber (19) through the cooling slits (16) radially inwards to the air gap (9) of the machine and after deflection through cooling slits radially outwards again into the second hot-gas chamber (20).

4. Electric machine according to Claim 3, characterised in that, with a specified impellent power of the main fan, the volumetric flow through the second hot-gas chamber (20) is so adjusted by dimensioning the number of tubes (11, 29, 30) and/or their cross-section that the latter is more than 50% of the volumetric flow impelled by the fan (1).

5. Electric machine according to one of Claims 1 to 4, characterized in that the distribution of the volumetric flow produced by the fan (1) can be set by varying axial width of the cooling slits (16) in a manner such that the slit width in the section of the laminated stator body (13) at the end is less than in the central section of the laminated stator body.

6. Electric machine according to one of Claims 1 to 5, characterized in that the distribution of the volumetric flow produced by the fan (1) can be set by variable axial width of the laminated subassemblies of the laminated stator body (13) and/or by variable axial width of the cooling slits (16) in a manner such that the width of the laminated subassemblies in the section at the end is less than in the central section of the laminated stator body (13) and/or their mutual spacing in the section at the end is less than in the central section of the laminated stator body (13).

## Revendications

1. Machine électrique avec une carcasse (14), un stator (13) disposé dans cette carcasse avec des conducteurs d'enroulement statorique refroidis indirectement disposés dans des encoches à la périphérie intérieure et un rotor (5), dans laquelle le noyau feuilleté du stator est constitué de plusieurs paquets de tôles partiels écartés l'un de l'autre par des pièces d'écartement et où les espaces intermédiaires entre deux paquets de tôles partiels successifs forment des fentes de refroidissement orientées radialement, et où les fentes de refroidissement relient des espaces d'air annulaires à la périphérie intérieure du paquet de tôles du stator avec des espaces de chambres qui sont situés entre la périphérie extérieure du noyau feuilleté du stator et la carcasse, espaces de chambres qui comprennent des chambres à gaz froid (12), à partir desquelles un gaz de refroidissement froid est refoulé dans des premiers espaces d'air correspondants, et des chambres à gaz chaud (19), dans lesquelles le gaz de refroidissement échauffé provenant de seconds espaces d'air pénètre en direction radiale vers l'extérieur, dans laquelle des ventilateurs (1) et des dispositifs de guidage du gaz de refroidissement sont prévus à au moins une extrémité de la machine, de préférence aux deux extrémités de la machine, lesquels conduisent le gaz de refroidissement refroidi par des échangeurs de chaleur (17), constituant le gaz froid, aux chambres à gaz froid et aspirent à nouveau le gaz de refroidissement échauffé hors des chambres à gaz chaud, la (les) chambre(s) à gaz chaud présente(s) dans le tronçon central de la machine disposant de conduites de gaz de refroidissement séparées (29, 30), caractérisée en ce que lesdites conduites de gaz de refroidissement (29, 30) assurent, en contournant les chambres à gaz chaud d'extrémité (19), une liaison directe entre la (les) chambre(s) à gaz chaud centrale(s) et les échangeurs de chaleur (17) et en ce que l'arrivée et l'évacuation du gaz de refroidissement sont réalisées par des tubes, respectivement par l'espace entre les tubes, qui sont posés dans l'espace entre le noyau feuilleté du stator et la carcasse.

2. Machine électrique suivant la revendication 1, caractérisée en ce que les chambres à gaz chaud et froid (12, 19, 20) sont formées par des cloisons de séparation à orientation radiale (22-25), qui sont disposées dans l'espace entre la périphérie extérieure du noyau feuilleté du stator (13) et la carcasse (14), et en ce que les conduites de gaz de refroidissement sont formées par des tubes (11, 29, 30) de longueurs différentes.

3. Machine électrique suivant la revendication 2, caractérisée en ce que les cloisons de séparation délimitent une première chambre à gaz chaud (19) d'extrémité, une chambre à gaz froid (12) qui s'y raccorde, et une seconde chambre à gaz chaud (20) centrale, où un gaz de refroidissement est envoyé à la première chambre à gaz chaud (19) radialement vers l'extérieur, à partir de l'entrefer (9) de la machine, à travers les fentes de refroidissement (16), est mené hors de la chambre à gaz froid (19) à travers les fentes de refroidissement (16) radialement vers l'intérieur vers l'entrefer (9) de la machine et, après déviation, à nouveau radialement vers l'extérieur à travers des fentes de refroidissement dans la seconde chambre à gaz chaud (20).

4. Machine électrique suivant la revendication 3, caractérisée en ce que, pour une puissance de transport prédéterminée du ventilateur principal, le courant volumique à travers la seconde chambre à gaz chaud (20) est, par dimensionnement du nombre de tubes (11, 29, 30) et/ou de leur section, réglé de telle manière que celui-ci soit plus grand que 50 % du courant volumique envoyé par le ventilateur (1).

5. Machine électrique suivant l'une ou l'autre des revendications 1 à 4, caractérisée en ce que la répartition du courant volumique produit par le ventilateur (1) est en outre réglable par une différence de largeur axiale des fentes de refroidissement (16), de telle sorte que la largeur des fentes est plus petite dans le tronçon d'extrémité du noyau feuilleté du stator (13) que dans le tronçon central du noyau feuilleté du stator.

6. Machine électrique suivant l'une ou l'autre des revendications 1 à 5, caractérisée en ce que la répartition du courant volumique produit par le ventilateur (1) est en outre réglable par une différence de largeur axiale des paquets de tôles partiels du noyau feuilleté du stator (13) et/ou par une différence de largeur axiale des fentes de refroidissement (16), de telle sorte que la largeur des paquets de tôles partiels est plus grande dans le tronçon d'extrémité que dans le tronçon central du noyau feuilleté du stator (13) et/ou que leur distance mutuelle est plus petite dans le tronçon d'extrémité que dans le tronçon central du noyau feuilleté du stator (13).

Fig.1

Fig.2

Fig.3

Fig. 4

Fig.5b

Fig.5a

Fig.6

EP 0 279 064 B1

Fig.7